# EUROPEAN PATENT SPECIFICATION

(11) **EP 3 816 817 B1**
(45) Date of publication and mention of the grant of the patent: **01.05.2024**
(21) Application number: 20176889.2
(22) Date of filing: 27.05.2020
(51) Int. Cl.: G06F 16/28, G06F 16/901

(54) **METHOD AND APPARATUS FOR IMPORTING DATA INTO GRAPH DATABASE, ELECTRONIC DEVICE AND MEDIUM**
VERFAHREN UND VORRICHTUNG ZUM IMPORTIEREN VON DATEN IN EINE GRAPH-DATENBANK, ELEKTRONISCHE VORRICHTUNG UND MEDIUM
PROCÉDÉ ET APPAREIL D'IMPORTATION DE DONNÉES DANS UNE BASE DE DONNÉES DE GRAPHIQUES, DISPOSITIF ÉLECTRONIQUE ET SUPPORT

(30) Priority: 31.10.2019 CN 201911051062
(43) Date of publication of application: 05.05.2021
(73) Proprietor: Beijing Baidu Netcom Science and Technology Co., Ltd., Beijing 100085 (CN)
(72) Inventor: ZHANG, Haiping, Beijing 100085 (CN); CHEN, Xi, Beijing, Chongqing 100085 (CN); WANG, Yang, Beijing, Chongqing 100085 (CN); WANG, Yifei, Beijing, Chongqing 100085 (CN); ZHENG, Jiepeng, Beijing, Chongqing 100085 (CN)
(74) Representative: Richly & Ritschel Patentanwälte PartG mbB

(56) References cited:
- WO-A1-2019/017997
- US-A1- 2012 173 541
- US-A1- 2018 196 861
- US-A1- 2018 357 329
- US-A1- 2019 205 480

## Description

### TECHNICAL FIELD

The present disclosure relates to the data processing technology, specifically to the big data technology, and in particular to a method and apparatus for importing data into a graph database, an electronic device and a medium.

### BACKGROUND

In a graph database, data import performance is an important evaluation index. When the amount of data reaches a certain level, the import performance of batch data degrades sharply due to a limitation to a resource such as a memory. Therefore, for the graph database, it is extremely urgent to find out a data import method that can adapt to a large amount of data.

However, in the current process of importing the batch data, it is required to frequently query data from an external storage medium such as a KV database, which seriously affects the speed of importing the data. United States Patent Application Publication No. US 2018/0357329 A1 provides a system for processing queries of a graph database, where the system obtains from a query a compound comprising a compound type and a set of identity-giving nodes, and the system uses the compound to access a tuple for storage in a log-based representation of the graph database, where the tuple includes the compound type and the identity-giving nodes, then the system uses the tuple to generate a result of the query and provides the result in a response to the query.

WO 2019/017997 A1 discloses techniques of writing data in a graph database.

### SUMMARY

Embodiments of the present disclosure provides a method and apparatus for importing data into a graph database, an electronic device and a medium, to improve a speed of importing data, thus improving a processing performance.

The object of the invention is solved by the features of the independent claims. Further embodiments are the subject-matter of the dependent claims.

### BRIEF DESCRIPTION OF THE DRAWINGS

Accompanying drawings are used for a better understanding of this scheme, and do not constitute a limitation to the present disclosure. In the accompanying drawings:
Fig. 1 is a flowchart of a method for importing data into a graph database provided according to a first embodiment of the present disclosure;
Fig. 2A is a flowchart of a method for importing data into a graph database provided according to a second embodiment of the present disclosure;
Fig. 2B is a schematic diagram of a process of sorting first tuple data provided according to the second embodiment of the present disclosure;
Fig. 3A is a flowchart of a method for importing data into a graph database provided according to a third embodiment of the present disclosure;
Figs. 3B and 3C are schematic diagrams of a process of determining a third tuple data pair provided according to the third embodiment of the present disclosure;
Fig. 4A is a flowchart of a method for importing data into a graph database provided according to a fourth embodiment of the present disclosure;
Fig. 4B is a schematic diagram of a process of determining combined data provided according to the fourth embodiment of the present disclosure;
Fig. 5 is a flowchart of a method for importing data into a graph database provided according to a fifth embodiment of the present disclosure;
Fig. 6 is a schematic structural diagram of an apparatus for importing data into a graph database provided according to a sixth embodiment of the present disclosure; and
Fig. 7 is a block diagram of an electronic device configured to implement the method for importing data into a graph database according to the embodiments of the present disclosure.

### DETAILED DESCRIPTION OF EMBODIMENTS

Description for exemplary embodiments of the present disclosure are given below in combination with the accompanying drawings, and various details of the embodiments of the present disclosure are included in the description to facilitate understanding, and should be construed as being only exemplary. Accordingly, one of ordinary skill in the art will recognize that various changes and modifications may be made to the embodiments described herein without departing from the scope of the present disclosure. Also, for clarity and conciseness, descriptions for well-known functions and structures are omitted in the following description.

### First Embodiment

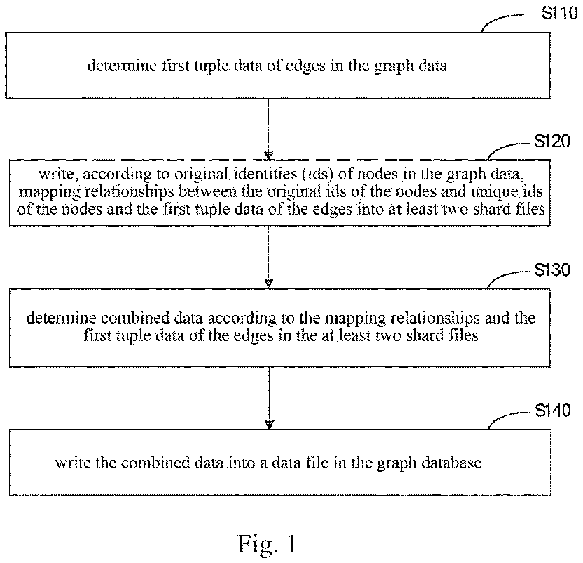

Fig. 1 is a flowchart of a method for importing data into a graph database provided according to a first embodiment of the present disclosure. This embodiment is based on a MapReudce logic and used to solve the problem of how to quickly import data into a graph database. The method may be performed by an apparatus for importing data into a graph database, and the apparatus may be implemented by means of software and/or hardware, and may be integrated in an electronic device carrying a data importing function. As shown in Fig. 1, the method for importing data into a graph database provided in this embodiment may include:
S110, determining first tuple data of edges in the graph data.

It may be appreciated that a graph refers to a graph, composed of a node and an edge. Here, the node represents an entity such as a person, an event, an object, a place, and the edge represents a relationship between two nodes. In this embodiment, the graph data refers to data to be imported into the graph database, and may include two types of data: the edge data and node data. Here, the node data may include an original id of the node, a node property, and a unique id assigned to the node; the edge data may include unique ids of the two nodes associated with the edge, an edge label, an edge property, and a unique id assigned to the edge. Here, the original id of the node is an identifier in the graph data that is used for uniquely indicating the entity represented by the node, for example, the identity number of the person. Since the entities represented by nodes are different, the length of the original ids of the nodes are different. Thus, for convenience of subsequent query, this embodiment assigns a unique id of a fixed-length to each node and each edge according to a set id assignment rule. For example, the each node and the each edge may be sequentially assigned a unique id of a fixed-length according to a natural number. The edge label is used to represent a relationship between nodes, and relationships between different nodes may be different. For example, node 1 refers to a person, and node 2 refers to a vehicle, and thus the edge label may refer to an affiliation relationship. As another example, the node 1 refers to the person, and node 3 refers to a person, and thus, the edge label may refer to a friend relationship.

As an example, after the graph data that needs to be imported into the graph database is obtained, the node in the graph data that needs to be imported into the graph database may first be assigned a unique id, and the node data is written into a data file in the graph database. At the same time, the edge in the graph data is assigned a unique id, and the edge data is written into the data file in the graph database. Further, the node data and the edge data in the data file may be stored in the form of a KV key-value pair. For example, for the node data, the unique id of the node may be stored into the key field, and the original id of the node and the node property may be stored into the value field. For the edge data, the unique id of the edge may be stored into the key field, and the original ids of the two nodes associated with the edge, the edge label and the edge property may be stored into the value field.

Then, the first tuple data of the edge in the graph data may be determined based on the edge, the node, and the like. Further, the first tuple data of the edge in the graph data may be determined according to the edge data, the node data, and the like. Here, the first tuple data at least include the original id of a node associated with the edge, the edge label, a node type and the unique id of the edge, and may further include other data in the edge data and/or the node data, and the like. Alternatively, the first tuple data in this embodiment may preferably be quadruple data including the original id of the node associated with the edge, the edge label, the node type and the unique id of the edge. The node type may be OUT or IN (OUT/IN). For two nodes associated with one edge, the node in the direction indicated by the arrow of the edge may be referred to as an IN node, and the node type of the corresponding IN node is IN. The other node is an OUT node, and the node type of the OUT node is OUT.

It may be appreciated that since an edge is associated with two nodes, each edge in the graph data may correspond to two pieces of first tuple data. For example, an edge is associated with the node 1 and the node 2, and one piece of first tuple data in the corresponding two pieces of first tuple data includes at least the original id of the node 1, the edge label, OUT, and the unique id of the edge. The other piece of first tuple data includes at least the original id of the node 2, the edge label, IN, and the unique id of the edge.

S120, writing, according to original identities (ids) of nodes in the graph data, mapping relationships between the original ids of the nodes and unique ids of the nodes and first tuple data of the edges into at least two shard files.

In order to avoid a situation where a large amount of data (i.e., data larger than a memory capacity) needs to be processed together, this embodiment introduces a shard file to improve the data processing performance. Alternatively, the number of shard files and the size of each shard file may be determined, according to the amount of data that needs to be imported into the graph database, an available memory capacity, etc. Further, the shard file is located in a magnetic disk, and the size of the each shard file is smaller than the memory capacity, and thus, the data in the each shard file may be completely read into the memory for processing.

In this embodiment, after the unique id is assigned to the node, the mapping relationship between the original id of the node and the unique id of the node is established. Further, after the first tuple data is determined, the mapping relationship and the first tuple data sharing an identical original id of the node is regarded as one data pair. Then, all data pairs may be written into a plurality of shard files according to the graph sequence and the size of the each shard file. Alternatively, one data pair may be written into one shard file.

The mapping relationships and the first tuple data may also be written into a plurality of shard files in a hash sharding mode. As an example, according to the original id of the node in the graph data, mapping relationships between the original ids of the nodes and the unique ids of the nodes and the first tuple data of the edges into at least two shard files may also refer to: determining hash values of the original ids of the nodes; and writing, according to the hash values, the mapping relationships between the original ids of the nodes and the unique ids of the nodes and the first tuple data of the edges into the at least two shard files.

In this embodiment, the hash value corresponding to the each shard file may be preset. For example, the shard file 1 is used to store data of which the hash values are 0-5. Specifically, in this embodiment, after the original id of the node and the unique id of the node are established, the original id of the node may be hashed to obtain the hash value of the original id of the node, and then the mapping relationship may be written into the corresponding shard file according to the hash value of the original id of the node. Meanwhile, after the first tuple data is determined, the first tuple data may be written into the corresponding shard file according to the hash value of the original id of the node in the first tuple data.

It should be noted that in a scenario in which the amount of data is large, the amount of the data written into a shard file can be controlled through the hash value, and thus, it may be ensured that the data in each shard file can be loaded into the memory to be separately processed, which avoids a situation in which a large amount of data needs to be processed together, and further improves the data processing performance. At the same time, the means of determining the shard file based on the hash value may also ensure that the mapping relationship and the first tuple data sharing an identical hash value of the original id may be written into the same shard file, which lays a foundation for the subsequent rapid determination of the combined data.

S130, determining combined data according to mapping relationships in the at least two shard files and the first tuple data of the edges.

It should be noted that there is often a query requirement in the actual scenario. For example, the node 1 refers to a person, and the edge label refers to the friend relationship. Therefore, when all the friends of the node 1 need to be searched, the query is slow since each piece of edge data is stored independently. Further, in order to improve the retrieval performance, in addition to writing the node data and the edge data into the data file in the graph database, it is also necessary to write the combined data into the data file.

Alternatively, the combined data may be composed of two or more combined fields. For example, in the combined data, a first combined field may be composed of the unique id of a first node, the edge label and the type of the first node, and a second combined field may be composed of the unique id of a second node and the unique id of the edge. Further, the first combined field may also be referred to as an index field, and correspondingly, the second combined field may also be referred to as a value field. The second field at least includes one value. Here, the first node and the second node are the two nodes associated with the edge. If the first node is an OUT node, the type of the first node is OUT, and the second node is an IN node. If the first node is an IN node, the type of the first node is IN, and the second node is an OUT node.

Specifically, the original ids of the nodes of the first tuple data may be replaced according to the mapping relationships in the plurality of shard files. Then, processing such as sorting, splitting and combining is performed on the replaced first tuple data, and thus, the combined data may be obtained.

S140, writing the combined data into the data file in the graph database.

In this embodiment, after the combined data is determined, the combined data may be written into the data file in the graph database.

According to the technical solution provided in the embodiment of the present disclosure, the mapping relationship and the first tuple data having the identical original id of a node can be written into the same shard file according to the original id of the node in the graph data. Then, the combined data is determined according to the mapping relationships and the first tuple data of the edge in the at least two shard files, and the combined data is written into the data file in the graph database. This reduces the number of times of querying data from the external storage medium, which increases the speed of importing the data, and provides a new idea for the importing of the graph data into the graph database.

### Second Embodiment

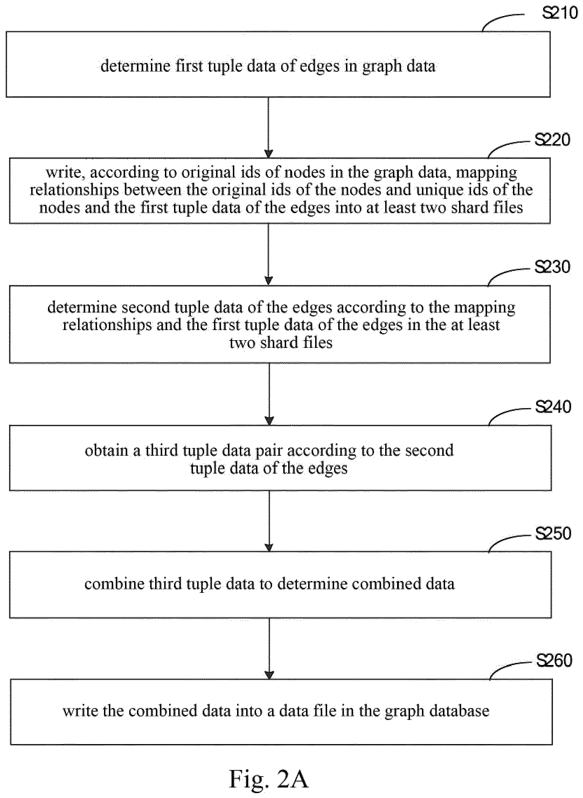

Fig. 2A is a flowchart of a method for importing data into a graph database provided according to a second embodiment of the present disclosure. On the basis of the above embodiment, this embodiment further explains the determining combined data according to mapping relationships and the first tuple data of the edges in the at least two shard files. As shown in Fig. 2A, the method for importing data into a graph database provided in this embodiment may include:
S210, determining first tuple data of edges in graph data.
S220, writing, according to original ids of nodes in the graph data, mapping relationships between the original ids of the nodes and unique ids of the nodes and first tuple data of the edges into at least two shard files.
S230, determining second tuple data of the edges according to the mapping relationships and the first tuple data of the edges in the at least two shard files.

In this embodiment, a piece of second tuple data include at least the unique id of the edge, the unique id of a node, an edge label, and the type of the node, and may further include other data in edge data and/or node data, and the like. the second tuple data in this embodiment is a quadruple data including the unique id of the edge, the unique id of the node, the edge label and the type of the node. Alternatively, each piece of first tuple data uniquely corresponds to one piece of second tuple data.

Specifically, after S220 is performed, the mapping relationship and the first tuple data sharing an identical original id of the node are written into the same shard file. Further, for each shard file, the shard file is read from a magnetic disk to a memory. Then, in the memory, the original id of a node in the first tuple data in the shard file may be replaced according to the mapping relationship in the shard file, and thus, the second tuple data may be obtained.

In order to accelerate the speed of the replacement, further, the determining second tuple data of the edge according to the mapping relationships and the first tuple data of the edges in the at least two shard files refer to: in the shard files, sorting the first tuple data and the mapping relationships according to the original ids of the nodes; and replacing, according to the mapping relationships, the original ids of the nodes in the first tuple data of the edges with the unique ids of the nodes, to obtain the second tuple data of the edges.

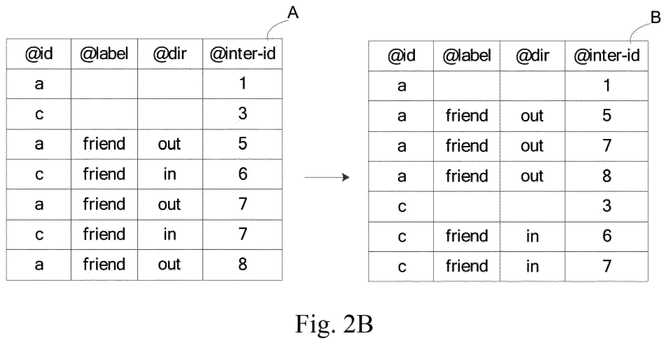

Specifically, for each shard file, after the shard file is read from the magnetic disk to the memory, the data, i.e., the first tuple data and the mapping relationships, in the shard file is sorted according to the original ids of the nodes, and thus, the mapping relationships and the first tuple data sharing an identical original id of the node are sorted together. For example, the shard file is provided with four fields: the original id of the node (@id), the edge label (@label), the node type (@dir) and the unique id (inter-id). After the process of S220, the data written into the shard file 1 is as shown in A in Fig. 2B. Then, the result after the first tuple data and the mapping relationship in the shard file 1 are sorted according to the original id of the node is as shown in B in Fig. 2B. Thereafter, the data in the shard file is traversed, and thus, the original id of the node in the first tuple data of the edge may be quickly replaced with the unique id of the node, and at the same time, the second tuple data may be constructed according to the replaced first tuple data.

It should be noted that, according to the original ids of the nodes, the mapping relationships and the first tuple data having the identical original id can be written into the same shard file. Thus, in the shard file, according to the mapping relationships, the original ids of the nodes in the first tuple data may be directly replaced with the unique ids of the nodes without performing a data query operation, thereby increasing the speed of importing the data. In addition, each shard can be loaded into the memory for sorting, and thus, the sorting for all data items is avoided, and there is no need to use the magnetic disk to perform merging, thereby further improving the performance.

S240, obtaining a third tuple data pair according to the second tuple data of the edges.

In this embodiment, the third tuple data pair may include two pieces of third tuple data. Here, a piece of third tuple data at least include the unique id of a first node, an edge label, a type of the first node, the unique id of a second node and the unique id of the edge, where the first node and the second node are two nodes associated with the edge. Further, other data in the edge data and/or the node data may further be included. in this embodiment, the third tuple data is a quintuple data including the unique id of the first node, the edge label, the type of the first node, the unique id of the second node and the unique id of the edge.

Alternatively, one edge may correspond to two pieces of first tuple data, and each piece of first tuple data uniquely corresponds to one piece of second tuple data. The two pieces of second tuple data sharing an identical unique id of the edge uniquely correspond to one third tuple data pair. That is, one edge uniquely corresponds to one piece of third tuple data pair.

Specifically, after the second tuple data is obtained, the two pieces of second tuple data sharing an identical unique id of an edge may be reconstructed, and thus, the third tuple data pair may be obtained.

S250, combining third tuple data to determine combined data.

The combined data is composed of two or more combined fields. a first combined field in the combined data is composed of the unique id of the first node, the edge label and the type of the first node, and a second combined field is composed of the unique id of the second node and the unique id of the edge. Further, the first combined field is referred to as an index field, and correspondingly, the second combined field may also be referred to as a value field. The second field at least includes one value.

Specifically, the unique id of the first node, the edge label, and the third tuple data of the type same as the type of the first node are combined, and thus, the combined data may be obtained.

S260, writing the combined data into a data file in the graph database.

According to the technical solution provided in the embodiment of the present disclosure, in a scenario in which the amount of data is large, the mapping relationships between the original ids of the nodes and the unique ids of the nodes and the determined first tuple data of the edges are written into the at least two shard files, according to the original ids of the nodes in the graph data. Then, the second tuple data may be quickly determined according to the mapping relationships and the first tuple data of the edges in the at least two shard files, and then the third tuple data is determined. The combined data may be obtained by combining the third tuple data, and the combined data is written into the data file in the graph database. This provides a method of hierarchical progressively determining the combined data, and reduces the number of times of querying data from the external storage medium, which can quickly determine the combined data, and provide a new idea for the determination of the combined data.

### Third Embodiment

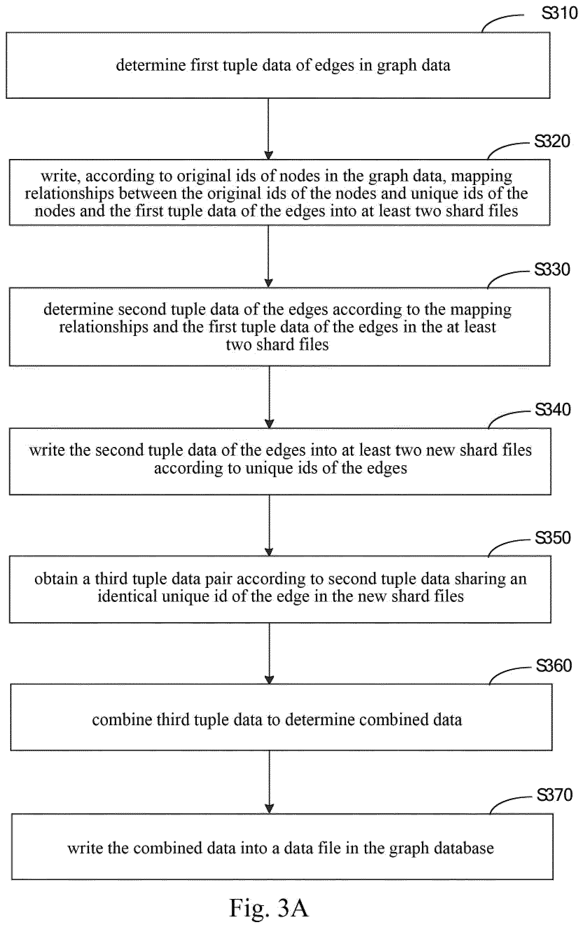

Fig. 3A is a flowchart of a method for importing data into a graph database provided according to a third embodiment of the present disclosure. On the basis of the above embodiments, this embodiment further explains the determining combined data according to the mapping relationship in the at least two shard files and the first tuple data of the edge. As shown in Fig. 3A, the method for importing data into a graph database provided in this embodiment may include:
S310, determining first tuple data of edges in graph data.
S320, writing, according to original ids of a nodes in the graph data, mapping relationships between the original ids of the nodes and unique ids of the nodes and first tuple data of the edges into at least two shard files.
S330, determining second tuple data of the edges according to the mapping relationships and the first tuple data of the edges in the at least two shard files.
S340, writing the second tuple data of the s into at least two new shard files according toa unique ids of the edges.

In this embodiment, the new shard files may also be stored in a magnetic disk, and the size of each new shard file is smaller than the memory capacity.

Specifically, in each shard file, after the second tuple data is determined by adopting step S330, the unique id of the edge in the second tuple data may be hashed, and thus, the hash value of the unique id of the edge may be obtained. Then, the second tuple data may then be written into the corresponding new shard file according to the hash value of the unique id of the edge.

S350, obtaining a third tuple data pair according to second tuple data sharing an identical unique id of the edge in the new shard files.

Specifically, after S340 is performed, the second tuple data sharing the identical unique id of the edge is written into the same new shard file. Further, for each new shard file, the new shard file may be read from the magnetic disk to the memory. Then, in the memory, two pieces of second tuple data sharing the identical unique id of each edge may be reconstructed, and thus, one third tuple data pair may be obtained.

In order to quickly obtain the third tuple data pair, further, the obtaining a third tuple data pair according to second tuple data sharing an identical unique id of the edge in the new shard files may refer to: sorting, in the new shard files, the second tuple data according to the unique id of the edge; and obtaining the third tuple data pair according to the second tuple data sharing the identical unique id of the edge.

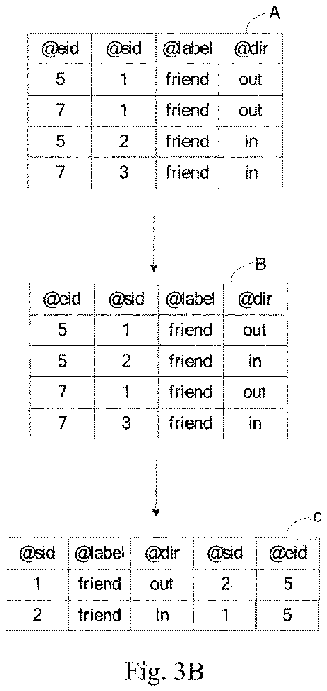

Specifically, for each new shard file, after the new shard file is read from the magnetic disk to the memory, the data, i.e., the second tuple data, in the new shard file may be sorted according to the unique ids of the edges, and thus, the second tuple data having the identical unique id of the edge is sorted together. For example, the new shard file is provided with four fields: the unique id of the edge (@eid), the unique id of the node (@sid), the edge label (@label), the node type (@dir) . After the process of S340, the data written into a new shard file 1 is as shown in A in Fig. 3B. Then, the result after the second tuple data in the new shard file 1 is sorted according to the unique ids of the edges is as shown in B in Fig. 3B. Thereafter, the data in the new shard file is traversed, two adjacent pieces of second tuple data sharing the identical unique id of the edge are reconstructed, and thus, the third tuple data pair may be obtained. For example, as shown in B in Fig. 3B, two pieces of second tuple data in which the unique id of the edge is 5 are reconstructed, and thus, the third tuple data pair shown in C in Fig. 3B may be obtained.

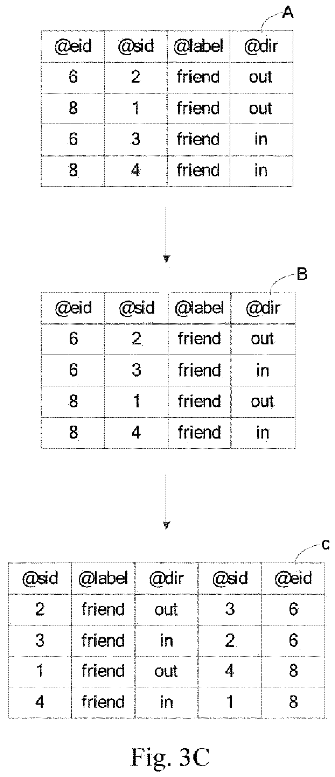

Similarly, the process from the second tuple data to the third tuple data pair in the new shard file 2 shown in Fig. 3C is identical to that of the new shard file 1.

It should be noted that each new shard can be loaded into the memory for sorting, and thus, the sorting for all data items is avoided, and there is no need to use the magnetic disk to perform merging, thereby further improving the performance.

S360, combining third tuple data to determine combined data.

S370, writing the combined data into a data file in a graph database.

According to the technical solution provided in the embodiment of the present disclosure, on the basis of the approach of determining the combined data based on the hierarchical progression, a method of quickly determining the third tuple data pair from the second tuple data is provided, which further improves the data processing performance.

### Fourth Embodiment

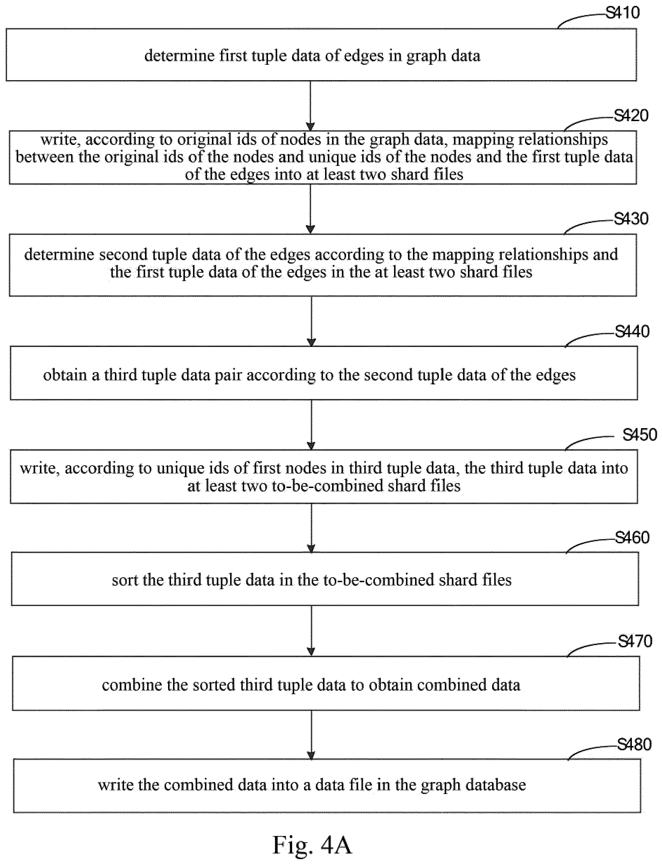

Fig. 4A is a flowchart of a method for importing data into a graph database provided according to a fourth embodiment of the present disclosure. On the basis of the above embodiments, this embodiment further explains the determining combined data according to a mapping relationship in the at least two shard files and the first tuple data of the edge. As shown in Fig. 4A, the method for importing data into a graph database provided in this embodiment may include:

S410, determining first tuple data of edges in graph data.

S420, writing, according to original ids of nodes in the graph data, mapping relationships between the original ids of the nodes and unique ids of the nodes and the first tuple data of the edges into at least two shard files.

S430, determining second tuple data of the edges according to the mapping relationships and the first tuple data of the edges in the at least two shard files.

S440, obtaining a third tuple data pair according to the second tuple data of the edges.

S450, writing, according to unique ids of first nodes in third tuple data, the third tuple data into at least two to-be-combined shard files.

In this embodiment, the to-be-combined shard files may also be stored in a magnetic disk, and the size of each to-be-combined shard file is smaller than the memory capacity.

Specifically, after the third tuple data pair is determined using S440 (as shown in Fig. 3B), the unique id of the first node in the third tuple data may be hashed, and thus, the hash value of the unique id of the first node may be obtained. Then, the third tuple data may be written into a corresponding new shard file according to the hash value of the unique id of the first node.

S460, sorting the third tuple data in the to-be-combined shard files.

Specifically, after S450 is performed, the third tuple data sharing an identical unique id of the first node is written into the same to-be-combined shard file. To facilitate the subsequent combination, for each to-be-combined shard file, after being read from the magnetic disk to the memory, the third tuple data may be sorted according to the unique ids of the first nodes, the edge labels and the types of the first nodes, and thus, the third tuple data sharing an identical unique id of the first node, the identical edge label and the identical first node type is sorted together.

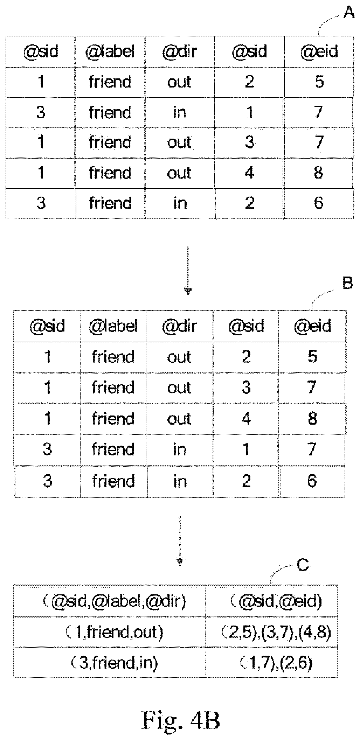

For example, the to-be-combined shard file is provided with five fields: the unique id of the first node (@sid), the edge label (@label), the type of the first node (@dir), the unique id of the second node (@sid) and the unique id of the edge (@eid). After the process of S450, the data written into a to-be-combined shard file 1 is as shown in A in Fig. 4B. Then, the result after the third tuple data in the to-be-combined shard file 1 is sorted according to the unique ids of the first nodes, the edge labels and the first node types is as shown in B in Fig. 3B.

S470, combining the sorted third tuple data to obtain combined data.

Specifically, the sorted third tuple data shown in B in Fig. 4B is combined, and thus, the combined data shown in C in Fig. 4B may be obtained.

S480, writing the combined data into a data file in the graph database.

According to the technical solution provided in the embodiment of the present disclosure, on the basis of the approach of determining the combined data based on the hierarchical progression, a method of quickly determining the combined data from the third tuple data is provided, which further improves the data processing performance.

### Fifth Embodiment

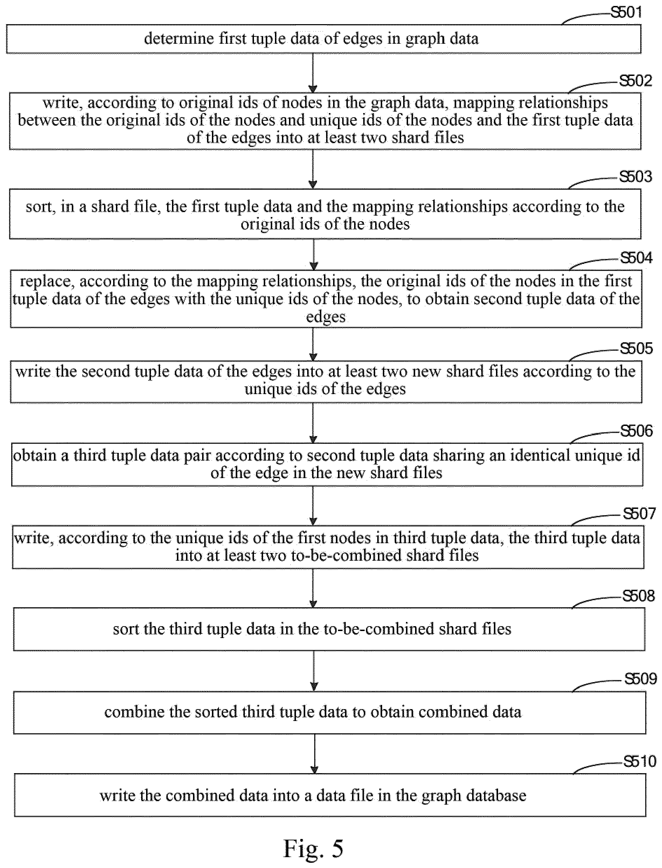

Fig. 5 is a flowchart of a method for importing data into a graph database provided according to a fifth embodiment of the present disclosure. On the basis of the above embodiments, this embodiment provides a preferable example. As shown in Fig. 5, the method for importing data into a graph database provided in this embodiment may include:
S501, determining first tuple data of edges in graph data.
S502, writing, according to original ids of nodes in the graph data, mapping relationships between the original ids of the nodes and unique ids of the nodes and the first tuple data of the edges into at least two shard files.
S503, sorting, in the shard files, the first tuple data and the mapping relationships according to the original ids of the nodes.
S504, replacing, according to the mapping relationships, the original ids of the nodes in the first tuple data of the edges with the unique ids of the nodes, to obtain second tuple data of the edges.
S505, writing the second tuple data of the edges into at least two new shard files according to unique ids of the edges.
S506, obtaining a third tuple data pair according to second tuple data sharing an identical unique id of the edge in the new shard files.
S507, writing, according to unique ids of first nodes in third tuple data, the third tuple data into at least two to-be-combined shard files.
S508, sorting the third tuple data in the to-be-combined shard files.
S509, combining the sorted third tuple data to obtain combined data.
S510, writing the combined data into a data file in the graph database.

According to the technical solution provided in the embodiment of the present disclosure, in a scenario in which the amount of data is large, the mapping relationships between the original ids of the nodes and the nodes and the determined first tuple data of the s are written into the at least two shard files according to the original ids of the nodes in the graph data. Then, the combined data is determined in a hierarchical progressive way, and written into the data file in the graph database. The technical means of determining the shard file based on the original id of the node may ensure that the mapping relationship and the first tuple data sharing an identical hash value of the original id may be written into the same shard file, which lays a foundation for the subsequent determination of the combined data. At the same time, it is not required to frequently query data from an external storage medium, which improves the speed of importing the data, and provides a new idea for the importing of the graph data into the graph database. In addition, the introduction of the shard files may avoid the situation in which a large amount of data needs to be processed together, which further improves the data processing performance.

### Sixth Embodiment

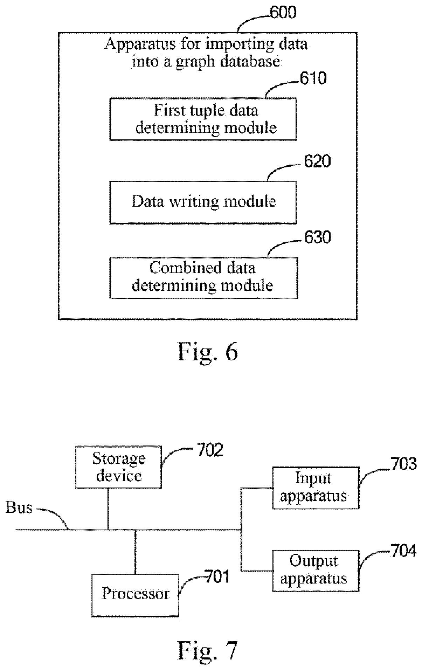

Fig. 6 is a schematic structural diagram of an apparatus for importing data into a graph database provided according to a sixth embodiment of the present disclosure, and the apparatus may perform the method for importing data into a graph database provided according to any embodiment of the present disclosure and possess corresponding functional modules of performing the method and beneficial effects. Alternatively, the apparatus may be implemented by means of software and/or hardware and may be integrated in an electronic device carrying a data import function. As shown in Fig. 6, the apparatus may include:
a first tuple data determining module 610, configured to determine first tuple data of edges in graph data;
a data writing module 620, configured to write, according to original ids of nodes in the graph data, mapping relationships between the original ids of the nodes and unique ids of the nodes and first tuple data of the edges into at least two shard files; and
a combined data determining module 630, configured to determine combined data according to the mapping relationships and the first tuple data of the edges in the at least two shard files.

The data writing module 620 is further configured to write the combined data into a data file in the graph database.

According to the technical solution provided in the embodiment of the present disclosure, the mapping relationships having the identical original ids of the nodes and the first tuple data can be written into the same shard file according to the original ids of the nodes in the graph data. Then, the combined data is determined according to the mapping relationships and the first tuple data of the edges in the at least two shard files, and the combined data is written into the data file in the graph database. This reduces the number of times of querying data from the external storage medium, which increases the speed of importing the data, and provides a new idea for the importing of the graph data into the graph database.

For example, the data writing module 620 may be specifically configured to:
determine hash values of the original ids of the nodes; and
write, according to the hash values, the mapping relationships between the original ids of the nodes and the unique ids of the nodes and the first tuple data of the edges into the at least two shard files.

For example, the first tuple data of the edge includes at least an original id of a node associated with the edge, an edge label, a node type and a unique id of the edge.

Correspondingly, the combined data determining module 630 may include:
a second tuple data determining unit, configured to determine second tuple data of the edges according to the mapping relationships and the first tuple data of the edges in the at least two shard files, wherein second tuple data of an edge includes at least a unique id of the edge, a unique id of a node, an edge label and a node type;
a third tuple data determining unit, configured to obtain a third tuple data pair according to the second tuple data of the edges, wherein a piece of third tuple data includes at least a unique id of a first node, the edge label, a type of the first node, a unique id of a second node and the unique id of the edge, wherein the first node and the second node are two nodes associated with an edge; and
a combined data determining unit, configured to combine the third tuple data to determine the combined data.

For example, the second tuple data determining unit may be specifically configured to:
sort, in a shard file, the first tuple data and the mapping relationships according to the original ids of the nodes; and
replace, according to the mapping relationships, the original ids of the nodes in the first tuple data of the edges with the unique ids of the nodes, to obtain the second tuple data of the edges.

For example, the third tuple data determining unit may include:
a second tuple data writing subunit, configured to write the second tuple data of the edges into at least two new shard files according to the unique ids of the edges; and
a third tuple data determining subunit, configured to obtain the third tuple data pair based on second tuple data having an identical unique id of an edge in the new shard files.

For example, the third tuple data determining subunit may be specifically configured to:
sort, in a new shard file, the second tuple data according to the unique ids of the edges; and
obtain the third tuple data pair according to the second tuple data having the identical unique id of the edge.

For example, the combined data determining unit may be specifically configured to:
write, according to unique ids of first nodes in the third tuple data, the third tuple data into at least two to-be-combined shard files;
sort the third tuple data in the to-be-combined shard files; and
combine the sorted third tuple data to obtain the combined data.

According to the embodiment of the present disclosure, the present disclosure further provides an electronic device and a readable storage medium.

As shown in Fig. 7, Fig. 7 is a block diagram of an electronic device of the method for importing data into a graph database according to the embodiments of the present disclosure. The electronic device is intended to represent various forms of digital computers such as a laptop computer, a desktop computer, a worktable, a personal digital assistant, a server, a blade server, a mainframe computer, and other suitable computers. The electronic device may also represent various forms of mobile apparatuses such as personal digital assistant, a cellular telephone, a smart phone, a wearable device, and other similar computing apparatuses. The parts shown herein, their connections and relationships and their functions are by way of example only, and are not intended to limit the implementation of the present disclosure as described and/or claimed herein.

As shown in Fig. 7, the electronic device includes one or more processors 701, a memory 702, and an interface for connecting parts, the interface including a high speed interface and a low speed interface. The parts are interconnected using different buses, and may be installed on a common motherboard or otherwise as desired. The processors may process an instruction executed within the electronic device, the instruction including an instruction stored in or on the storage device to display graphical information of a GUI (Graphical User Interface) on an external input/output apparatus such as a display device coupled to the interface. In other embodiments, a plurality of processors and/or a plurality of buses and a plurality of storage devices may be used with a plurality of storage devices together, if desired. Also, a plurality of electronic devices may be connected, each of the devices provides some of necessary operations, for example, as a server array, a set of blade servers, or a multiprocessor system. In Fig. 7, the processor 701 is taken as an example.

The storage device 702 is a non-transitory computer readable storage medium provided in the present disclosure. Here, the storage device stores an instruction executable by at least one processor to cause the at least one processor to perform the method for importing data into a graph database provided in the present disclosure. The non-transitory computer readable storage medium in the present disclosure stores a computer instruction, and the computer instruction is used to cause a computer to perform the method for importing data into a graph database provided in the present disclosure.

As a computer readable storage medium, the storage device 720 may be used to store non-transitory software programs, non-transitory computer executable programs, and modules, for example, the program instructions/modules corresponding to the method for importing data into graph database in the embodiments of the present disclosure (for example, the first tuple data determining module 610, the data writing module 620, the combined data determining module 630) . The processor 710 runs the software programs, instructions and modules stored in the storage device 702 to execute various functional applications and data processing of the server, that is, to implement the method for importing data into the graph database of the above method embodiments.

The storage device 702 may include a program storage area and a data storage area. The program storage area may store an operating system and an application required for at least one function. The data storage area may store data and the like created according to the usage of an electronic device for implementing the method of importing data into a graph database. In addition, the storage device 702 may include a high-speed random access memory, and may also include a non-transitory memory, e.g., at least one disk storage device, a flash memory device or other non-volatile solid-state storage devices. In some embodiments, the storage device 702 may alternatively include memories remotely arranged relative to the processor 701, where the remote memories may be connected to the electronic device by a network. An example of the above network includes but not limited to, the Internet, an enterprise intranet, a local area network, a mobile communications network, and a combination thereof.

The electronic device for implementing the method for importing data into a graph database may further include an input apparatus 703 and an output apparatus 704. The processor 701, the storage device 702, the input apparatus 703, and the output apparatus 704 may be connected via a bus or otherwise. In Fig. 7, the connection via a bus is taken as an example.

The input apparatus 703 may receive an inputted number or inputted character information, and generate a key signal input related to the user setting and functional control of the electronic device for implementing the method of importing data into a graph database, for example, the input apparatus is a touch screen, a keypad, a mouse, a track pad, a touch pad, a pointing stick, one or more mouse buttons, a track ball, a joystick, or the like. The output apparatus 704 may include a display device, an auxiliary lighting apparatus (e.g., a Light Emitting Diode (LED), a tactile feedback apparatus (e.g., a vibration motor), and the like. The display device may include, but not limited to, a Liquid Crystal Display (LCD), an LED display, and a plasma display. In some embodiments, the display device may be a touch screen.

Various implementations of the systems and techniques described herein may be implemented in a digital electronic circuit system, an integrated circuit system, an Application Specific Integrated Circuit (ASIC), computer hardware, firmware, software, and/or combinations thereof. These various implementations may include the implementation in one or more computer programs. The one or more computer programs may be executed and/or interpreted on a programmable system including at least one programmable processor, and the programmable processor may be a dedicated or general purpose programmable processor, may receive data and instructions from a storage system, at least one input apparatus and at least one output apparatus, and transmit the data and the instructions to the storage system, the at least one input apparatus and the at least one output apparatus.

These computing programs, also referred to as programs, software, software applications or codes, include a machine instruction of the programmable processor, and may be implemented using a high-level procedural and/or object-oriented programming language, and/or an assembly/machine language. As used herein, the terms "machine readable medium" and "computer readable medium" refer to any computer program product, device and/or apparatus (e.g., a magnetic discs, an optical disk, a storage device and a Programmable Logic Device (PLD)) used to provide a machine instruction and/or data to the programmable processor, including a machine readable medium that receives the machine instruction as a machine readable signal. The term "machine readable signal" refers to any signal used to provide the machine instruction and/or data to the programmable processor.

To provide an interaction with a user, the systems and techniques described here may be implemented on a computer, the computer has: a display apparatus, such as a CRT (Cathode Ray Tube) or an LCD monitor, for displaying information to the user; and a keyboard and a pointing apparatus, such as a mouse or a track ball, by which the user may provide the input to the computer. Other kinds of apparatuses may also be used to provide the interaction with the user. For example, a feedback provided to the user may be any form of sensory feedback, such as, e.g., a visual feedback, a auditory feedback, or a tactile feedback); and an input from the user may be received in any form, including acoustic, speech, or tactile input.

The systems and techniques described here can be implemented in a computing system (e.g., as a data server) that includes a back end part; or implemented in a computing system (e.g., an application server) that includes a middleware part; or implemented in a computing system (e.g., a user computer having a graphical user interface or a Web browser through which the user may interact with an implementation of the systems and techniques described here) that includes a front end part; or implemented in a computing system that includes any combination of the back end part, the middleware part, or the front end part. The parts of the system may be interconnected by any form or medium of digital data communication (e.g., a communication network) . Examples of the communication network include a Local Area Network (LAN), a Wide Area Network (WAN), and the Internet.

The computing system may include a client and a server. The client and the server are generally remote from each other and typically interact through the communication network. The relationship between the client and the server is generated through computer programs running on the respective computer and having a client-server relationship to each other.

According to the technical solution provided in the embodiments of the present disclosure, in a scenario in which the amount of data is large, according to the original ids of the nodes in graph data, the mapping relationships between the original ids of the nodes and the nodes and determined first tuple data of the edges are written into at least two shard files. Then, combined data is determined in a hierarchical progressive way, and written into a data file in a graph database. The technical means of determining the shard file based on the original id of the node may ensure that a mapping relationship and the first tuple data sharing an identical hash value of the original id may be written into the same shard file, which lays a foundation for the subsequent determination of the combined data. At the same time, it is not required to frequently query data from an external storage medium, which improves the speed of importing the data, and provides a new idea for the importing of the graph data into the graph database. In addition, the introduction of the shard files may avoid the situation in which a large amount of data needs to be processed together, which further improves the data processing performance.

It should be understood that the various forms of processes shown above may be used to resort, add or delete steps. For example, the steps described in the present disclosure may be performed in parallel, sequentially, or in a different order. As long as the desired result of the technical solution disclosed in the present disclosure can be achieved, no limitation is made herein. The above specific embodiments do not constitute a limitation on the protection scope of the present application. Those skilled in the art should understand that various modifications, combinations, sub-combinations and substitutions can be made according to design requirements and other factors. Modifications, replacements and improvements made within the principles of the application shall be included in the scope of protection of this application.

## Claims

1. A method for importing batch graph data into a graph database, comprising:
determining (S 110, S210) first tuple data of edges in the graph data; a piece of first tuple data of an edge includes at least an original id of a node associated with the edge, an edge label, a node type, and a unique id of the edge; wherein a unique id of a fixed-length is sequentially assigned to each node and each edge according to natural number, and a mapping relationship between an original id of a node and a unique id of the node is established after the unique id is assigned to the node,
writing (S120, S220), according to original identities, ids, of nodes in the graph data:
- mapping relationships between the original ids of the nodes and unique ids of the nodes;
- and first tuple data of the edges
into at least two shard files; wherein the mapping relationship and the first tuple data having the identical original id of a node are written into the same shard file; wherein the shard file is located in a magnetic disk, and a size of each shard file is smaller than a memory capacity;
determining (S230) second tuple data of the edges according to the mapping relationships and the first tuple data of the edges in the at least two shard files, wherein second tuple data of an edge is quadruple data including a unique id of the edge, a unique id of a node, an edge label and a node type; wherein for each shard file, the shard file is read from the magnetic disk to a memory, in the memory, the first tuple data and the mapping relationships are sorted according to the original ids of the nodes, and the original ids of the nodes in the first tuple data of the edges are replaced with the unique ids of the nodes, to obtain second tuple data of the edges;
obtaining (S350, S240) a third tuple data pair by reconstructing second tuple data sharing an identical unique id of an edge in the new shard files, wherein two pieces of second tuple data sharing an identical unique id of an edge uniquely correspond to one third tuple data pair; wherein a piece of third tuple data is a quintuple data including the unique id of the first node, the edge label, the type of the first node, the unique id of the second node and the unique id of the edge; wherein the first node and the second node are two nodes associated with the edge: and
combining (S250) the third tuple data to determine the combined data; wherein the combined data being composed of two or more combined fields, a first combined field being composed of a unique id of a first node, an edge label and a type of the first node, and a second combined field being composed of a unique id of a second node and a unique id of an edge, the first node and the second node being nodes associates with the edge, wherein the first combined field is an index field and the second combined field is a value field, and the second combined field at least includes one value;
writing (S140, S260) the combined data into a data file in the graph database.

2. The method according to claim 1, wherein the writing (S120), according to the original ids of the nodes in the graph data, the mapping relationships between the original ids of the nodes and the unique ids of the nodes and the first tuple data of the edges into at least two shard files comprises:
determining hash values of the original ids of the nodes; and
writing, according to the hash values, the mapping relationships between the original ids of the nodes and the unique ids of the nodes and the first tuple data of the edges into the at least two shard files.

3. The method according to claim 1, wherein the obtaining (S240) the third tuple data pair according to the second tuple data of the edges comprises:
writing (S340) the second tuple data of the edges into at least two new shard files according to the unique ids of the edges; and
obtaining (S350) the third tuple data pair based on second tuple data having an identical unique id of an edge in the new shard files.

4. The method according to claim 3, wherein the obtaining (S350) the third tuple data pair based on second tuple data having an identical unique id of the edge in the new shard files comprises:
sorting, in a new shard file, the second tuple data according to the unique ids of the edges; and
obtaining the third tuple data pair according to the second tuple data having the identical unique id of the edge.

5. The method according to claim 3, wherein the combining (S250) the third tuple data to determine combined data comprises:
writing (S450), according to unique ids of first nodes in the third tuple data, the third tuple data into at least two to-be-combined shard files;
sorting (S460) the third tuple data in the to-be-combined shard files; and
combining (S470) the sorted third tuple data to obtain the combined data.

6. An apparatus for importing batch graph data into a graph database, comprising:
a first tuple data determining module (610), configured to determine (S 110, S210) first tuple data of edges in the graph data; a piece of first tuple data of an edge includes at least an original id of a node associated with the edge, an edge label, a node type, and a unique id of the edge; wherein a unique id of a fixed-length is sequentially assigned to each node and each edge according to natural number, and a mapping relationship between an original id of a node and a unique id of the node is established after the unique id is assigned to the node,
a data writing module (620), configured to write (S 120, S220), according to original identities (ids) of nodes in the graph data:
- mapping relationships between the original ids of the nodes and unique ids of the nodes; and
- first tuple data of the edges
into at least two shard files; wherein the mapping relationship and the first tuple data having the identical original id of a node are written into the same shard file; wherein the shard file is located in a magnetic disk, and a size of each shard file is smaller than the memory capacity;
a combined data determining module (630), configured to determine (S130) combined data according to said mapping relationships and the first tuple data of the edges in the at least two shard files,
wherein the data writing module (620) is further configured to write (S140) the combined data into a data file in the graph database,
wherein the combined data determining module (630) is further configured to:
determine (S230) second tuple data of the edges according to the mapping relationships and the first tuple data of the edges in the at least two shard files, wherein second tuple data of an edge includes at least a unique id of the edge, a unique id of a node, an edge label and a node type; wherein for each shard file, the shard file is read from the magnetic disk to a memory, in the memory, the first tuple data and the mapping relationships are sorted according to the original ids of the nodes, and the original ids of the nodes in the first tuple data of the edges are replaced with the unique ids of the nodes, to obtain second tuple data of the edges;
obtain (S350, S240) a third tuple data pair by reconstructing second tuple data sharing an identical unique id of an edge in the new shard files, wherein two pieces of second tuple data sharing an identical unique id of an edge uniquely correspond to one third tuple data pair; wherein a piece of third tuple data includes at least the unique id of the first node, the edge label, the type of the first node, the unique id of the second node and the unique id of the edge; and
combine (S250) the third tuple data to determine the combined data;; wherein the combined data being composed of two or more combined fields, a first combined field being composed of a unique id of a first node, an edge label and a type of the first node, and a second combined field being composed of a unique id of a second node and a unique id of an edge, the first node and the second node being nodes associates with the edge, wherein the first combined field is an index field and the second combined field is a value field, and the second combined field at least includes one value.

7. An electronic device, comprising:
at least one processor; and
a storage device, communicated with the at least one processor,
wherein the storage device stores an instruction executable by the at least one processor, and the instruction, when executed by the at least one processor, enables the at least one processor to perform the method for importing data into a graph database according to any one of claims 1-5.

8. A non-transitory computer readable storage medium, storing a computer instruction, wherein the computer instruction, when executed by a processor, cause the processor to perform the method for importing data into a graph database according to any one of claims 1-5.

## Patentansprüche

1. Verfahren zum Importieren von Batch-Graph-Daten in eine Graph-Datenbank, umfassend:
Bestimmen (S110, S210) erster Tupeldaten von Kanten in den Graphdaten; ein Stück erster Tupeldaten einer Kante beinhaltet mindestens eine ursprüngliche ID eines Knotens, der der Kante zugeordnet ist, eine Kantenbeschriftung, einen Knotentyp und eine eindeutige ID der Kante; wobei jedem Knoten und jeder Kante nacheinander eine eindeutige ID einer festen Länge gemäß einer natürlichen Zahl zugewiesen wird und eine Zuordnungsbeziehung zwischen einer ursprünglichen ID eines Knotens und einer eindeutigen ID des Knotens hergestellt wird, nachdem die eindeutige ID dem Knoten zugewiesen wurde,
Schreiben (S120, S220), gemäß den ursprünglichen Identitäten, IDs, der Knoten in den Graphdaten:
- Zuordnen der Beziehungen zwischen den ursprünglichen IDs der Knoten und eindeutigen IDs der Knoten;
- und erste Tupeldaten der Kanten
in mindestens zwei Shard-Dateien; wobei die Zuordnungsbeziehung und die ersten Tupeldaten mit der identischen ursprünglichen ID eines Knotens in dieselbe Shard-Datei geschrieben werden; wobei sich die Shard-Datei in einer Magnetplatte befindet und eine Größe jeder Shard-Datei kleiner als eine Speicherkapazität ist;
Bestimmen (S230) zweiter Tupeldaten der Kanten gemäß den Zuordnungsbeziehungen und den ersten Tupeldaten der Kanten in den mindestens zwei Shard-Dateien, wobei zweite Tupeldaten einer Kante Vierfachdaten sind, die eine eindeutige ID der Kante, eine eindeutige ID eines Knotens, ein Kantenlabel und einen Knotentyp enthalten; wobei für jede Shard-Datei die Shard-Datei von der Magnetplatte in einen Speicher gelesen wird, in dem Speicher die ersten Tupeldaten und die Zuordnungsbeziehungen gemäß den ursprünglichen IDs der Knoten sortiert werden und die ursprünglichen IDs der Knoten in den ersten Tupeldaten der Kanten durch die eindeutigen IDs der Knoten ersetzt werden, um zweite Tupeldaten der Kanten zu erhalten;
Erhalten (S350, S240) eines dritten Tupeldatenpaars durch Rekonstruieren zweiter Tupeldaten, die eine identische eindeutige ID einer Kante in den neuen Shard-Dateien teilen, wobei zwei Teile zweiter Tupeldaten, die eine identische eindeutige ID einer Kante teilen, eindeutig einem dritten Tupeldatenpaar entsprechen; wobei ein Teil dritter Tupeldaten Fünffachdaten sind, die die eindeutige ID des ersten Knotens, das Kantenetikett, den Typ des ersten Knotens, die eindeutige ID des zweiten Knotens und die eindeutige ID der Kante beinhalten; wobei der erste Knoten und der zweite Knoten zwei Knoten sind, die der Kante zugeordnet sind: und
Kombinieren (S250) der dritten Tupeldaten, um die kombinierten Daten zu bestimmen; wobei die kombinierten Daten aus zwei oder mehr kombinierten Feldern bestehen, wobei ein erstes kombiniertes Feld aus einer eindeutigen ID eines ersten Knotens, einer Kantenbeschriftung und einem Typ des ersten Knotens besteht, und ein zweites kombiniertes Feld aus einer eindeutigen ID eines zweiten Knotens und einer eindeutigen ID einer Kante besteht, wobei der erste Knoten und der zweite Knoten Knoten Knoten sind, die der Kante zugeordnet sind, wobei das erste kombinierte Feld ein Indexfeld ist und das zweite kombinierte Feld ein Wertefeld ist und das zweite kombinierte Feld mindestens einen Wert beinhaltet;
Schreiben (S140, S260) der kombinierten Daten in eine Datendatei in der Graphdatenbank.

2. Verfahren nach Anspruch 1, wobei das Schreiben (S120), gemäß den ursprünglichen IDs der Knoten in den Graphdaten, der Zuordnungsbeziehungen zwischen den ursprünglichen IDs der Knoten und den eindeutigen IDs der Knoten und den ersten Tupeldaten der Kanten in mindestens zwei Shard-Dateien umfasst:
Bestimmen von Hashwerten der ursprünglichen IDs der Knoten; und
Schreiben der Zuordnungsbeziehungen zwischen den ursprünglichen IDs der Knoten und den eindeutigen IDs der Knoten und den ersten Tupeldaten der Kanten gemäß den Hashwerten in die mindestens zwei Shard-Dateien.

3. Verfahren nach Anspruch 1, wobei das Erhalten (S240) des dritten Tupeldatenpaars gemäß den zweiten Tupeldaten der Kanten umfasst:
Schreiben (S340) der zweiten Tupeldaten der Kanten in mindestens zwei neue Shard-Dateien gemäß den eindeutigen IDs der Kanten; und
erhalten (S350) des dritten Tupeldatenpaars basierend auf zweiten Tupeldaten, die eine identische eindeutige ID einer Kante in den neuen Shard-Dateien aufweisen.

4. Verfahren nach Anspruch 3, wobei das Erhalten (S350) des dritten Tupeldatenpaars auf Grundlage von zweiten Tupeldaten mit einer identischen eindeutigen ID der Kante in den neuen Shard-Dateien umfasst:
Sortieren der zweiten Tupeldaten in einer neuen Shard-Datei gemäß den eindeutigen IDs der Kanten; und
Erhalten des dritten Tupeldatenpaars gemäß den zweiten Tupeldaten, die die identische eindeutige ID der Kante aufweisen.

5. Verfahren nach Anspruch 3, wobei das Kombinieren (S250) der dritten Tupeldaten zum Bestimmen kombinierter Daten Folgendes umfasst:
Schreiben (S450), gemäß eindeutiger IDs erster Knoten in den dritten Tupeldaten, der dritten Tupeldaten in mindestens zwei zu kombinierende Shard-Dateien;
Sortieren (S460) der dritten Tupeldaten in den zu kombinierenden Shard-Dateien; und
Kombinieren (S470) der sortierten dritten Tupeldaten, um die kombinierten Daten zu erhalten.

6. Vorrichtung zum Importieren von Batch-Graph-Daten in eine Graph-Datenbank, umfassend:
ein erstes Tupeldaten-Bestimmungsmodul (610), das dazu konfiguriert ist, erste Tupeldaten von Kanten in den Graph-Daten zu bestimmen (S110, S210); ein Stück erster Tupeldaten einer Kante mindestens eine ursprüngliche ID eines Knotens, der der Kante zugeordnet ist, eine Kantenbezeichnung, einen Knotentyp und eine eindeutige ID der Kante umfasst; wobei jedem Knoten und jeder Kante nacheinander eine eindeutige ID einer festen Länge gemäß einer natürlichen Zahl zugewiesen wird und eine Zuordnungsbeziehung zwischen einer ursprünglichen ID eines Knotens und einer eindeutigen ID des Knotens hergestellt wird, nachdem die eindeutige ID dem Knoten zugewiesen wurde,
ein Datenschreibmodul (620), das dazu konfiguriert ist, gemäß ursprünglichen Identitäten (IDs) von Knoten in den Graphdaten zu schreiben (S120, S220):
- Zuordnen der Beziehungen zwischen den ursprünglichen IDs der Knoten und eindeutigen IDs der Knoten; und
- erste Tupeldaten der Kanten
in mindestens zwei Shard-Dateien; wobei die Zuordnungsbeziehung und die ersten Tupeldaten mit der identischen ursprünglichen ID eines Knotens in dieselbe Shard-Datei geschrieben werden; wobei sich die Shard-Datei in einer Magnetplatte befindet und eine Größe jeder Shard-Datei kleiner als die Speicherkapazität ist;
ein kombiniertes Datenbestimmungsmodul (630), das dazu konfiguriert ist, kombinierte Daten gemäß den Zuordnungsbeziehungen und den ersten Tupeldaten der Kanten in den mindestens zwei Shard-Dateien zu bestimmen (S130),
wobei das Datenschreibmodul (620) ferner dazu konfiguriert ist, die kombinierten Daten in eine Datendatei in der Graphdatenbank zu schreiben (S140),
wobei das kombinierte Datenbestimmungsmodul (630) ferner konfiguriert ist zum:
Bestimmen (S230) zweiter Tupeldaten der Kanten gemäß den Zuordnungsbeziehungen und den ersten Tupeldaten der Kanten in den mindestens zwei Shard-Dateien, wobei zweite Tupeldaten einer Kante mindestens eine eindeutige ID der Kante, eine eindeutige ID eines Knotens, eine Kantenbeschriftung und einen Knotentyp beinhalten; wobei für jede Shard-Datei die Shard-Datei von der Magnetplatte in einen Speicher gelesen wird, in dem Speicher die ersten Tupeldaten und die Zuordnungsbeziehungen gemäß den ursprünglichen IDs der Knoten sortiert werden und die ursprünglichen IDs der Knoten in den ersten Tupeldaten der Kanten durch die eindeutigen IDs der Knoten ersetzt werden, um zweite Tupeldaten der Kanten zu erhalten;
Erhalten (S350, S240) eines dritten Tupeldatenpaars durch Rekonstruieren zweiter Tupeldaten, die eine identische eindeutige ID einer Kante in den neuen Shard-Dateien teilen, wobei zwei Stücke zweiter Tupeldaten, die eine identische eindeutige ID einer Kante teilen, eindeutig einem dritten Tupeldatenpaar entsprechen; wobei ein Stück dritter Tupeldaten mindestens die eindeutige ID des ersten Knotens, die Kantenbeschriftung, den Typ des ersten Knotens, die eindeutige ID des zweiten Knotens und die eindeutige ID der Kante beinhaltet; und
Kombinieren (S250) der dritten Tupeldaten, um die kombinierten Daten zu bestimmen; ; wobei die kombinierten Daten aus zwei oder mehr kombinierten Feldern bestehen, wobei ein erstes kombiniertes Feld aus einer eindeutigen ID eines ersten Knotens, einer Kantenbeschriftung und einem Typ des ersten Knotens besteht, und ein zweites kombiniertes Feld aus einer eindeutigen ID eines zweiten Knotens und einer eindeutigen ID einer Kante besteht, wobei der erste Knoten und der zweite Knoten Knoten der Kante zugeordnet sind, wobei das erste kombinierte Feld ein Indexfeld ist und das zweite kombinierte Feld ein Wertefeld ist und das zweite kombinierte Feld mindestens einen Wert beinhaltet.

7. Elektronische Vorrichtung (100) umfassend:
wenigstens einen Prozessor; und
eine Speichervorrichtung, die mit dem mindestens einen Prozessor kommuniziert,
wobei die Speichervorrichtung eine durch den mindestens einen Prozessor ausführbare Anweisung speichert und die Anweisung, wenn sie durch den mindestens einen Prozessor ausgeführt wird, es dem mindestens einen Prozessor ermöglicht, das Verfahren zum Importieren von Daten in eine Graphdatenbank nach einem der Ansprüche 1-5 durchzuführen.

8. Nichtflüchtiges computerlesbares Speichermedium, das eine Computeranweisung speichert, wobei die Computeranweisung, wenn sie von einem Prozessor ausgeführt wird, den Prozessor veranlasst, das Verfahren zum Importieren von Daten in eine Graph-Datenbank nach einem der Ansprüche 1-5 durchzuführen.

## Revendications

1. Procédé d'importation de données de graphiques par lots dans une base de données de graphiques, comprenant les étapes consistant à :
déterminer (S110, S210) des premières données de uplet des arêtes dans les données de graphiques ; une partie de premières données de uplet d'une arête comprend au moins un identifiant original d'un noeud associé à l'arête, une étiquette d'arête, un type de noeud et un identifiant unique de l'arête ; dans lequel un identifiant unique d'une longueur fixe est attribué séquentiellement à chaque noeud et à chaque arête en fonction du nombre naturel, et une relation de mappage entre un identifiant original d'un noeud et un identifiant unique du noeud est établie après que l'identifiant unique est attribué au noeud,
écrire (S120, S220), en fonction des identités originales, id, des noeuds dans les données de graphiques :
- mapper des relations entre les identifiants originaux des noeuds et les identifiants uniques des noeuds ;
- et les premières données de uplet des arêtes
dans au moins deux fichiers de fragments ; dans lequel la relation de mappage et les premières données de uplet ayant l'identifiant original identique d'un noeud sont écrites dans le même fichier de fragments ; dans lequel le fichier de fragments est situé dans un disque magnétique, et une taille de chaque fichier de fragments est inférieure à une capacité de mémoire ;
déterminer (S230) des deuxièmes données de uplet des arêtes en fonction des relations de mappage et des premières données de uplet des arêtes dans les au moins deux fichiers de fragments, dans lequel les deuxièmes données de uplet d'une arête sont des données de quadruplet comprenant un identifiant unique de l'arête, un identifiant unique d'un noeud, une étiquette d'arête et un type de noeud ; dans lequel pour chaque fichier de fragments, le fichier de fragments est lu à partir du disque magnétique vers une mémoire, dans la mémoire, les premières données de uplet et les relations de mappage sont triées en fonction des identifiants originaux des noeuds, et les identifiants originaux des noeuds dans les premières données de uplet des arêtes sont remplacés par les identifiants uniques des noeuds, pour obtenir des deuxièmes données de uplet des arêtes ;
obtenir (S350, S240) une troisième paire de données de uplet en reconstruisant des deuxièmes données de uplet partageant un identifiant unique identique d'une arête dans les nouveaux fichiers de fragments, dans lequel deux parties de deuxièmes données de uplet partageant un identifiant unique identique d'une arête correspondent uniquement à une troisième paire de données de uplet ; dans lequel une partie de troisièmes données de uplet sont des données de quintuplet comprenant l'identifiant unique du premier noeud, l'étiquette d'arête, le type du premier noeud, l'identifiant unique du deuxième noeud et l'identifiant unique de l'arête ;
dans lequel le premier noeud et le deuxième noeud sont deux noeuds associés à l'arête ; et
combiner (S250) les troisièmes données de uplet pour déterminer les données combinées ; dans lequel les données combinées sont composées de deux ou plusieurs champs combinés, un premier champ combiné étant composé d'un identifiant unique d'un premier noeud, d'une étiquette d'arête et d'un type du premier noeud, et un deuxième champ combiné étant composé d'un identifiant unique d'un deuxième noeud et d'un identifiant unique d'une arête, le premier noeud et le deuxième noeud étant des noeuds associés à l'arête, dans lequel le premier champ combiné est un champ d'index et le deuxième champ combiné est un champ de valeur, et le deuxième champ combiné comprend au moins une valeur ;
écrire (S140, S260) les données combinées dans un fichier de données dans la base de données de graphiques.

2. Procédé selon la revendication 1, dans lequel l'écriture (S120), en fonction des identifiants originaux des noeuds dans les données de graphiques, des relations de mappage entre les identifiants originaux des noeuds et les identifiants uniques des noeuds et les premières données de uplet des arêtes dans au moins deux fichiers de fragment comprend les étapes consistant à :
déterminer des valeurs de hachage des identifiants originaux des noeuds ; et
écrire, en fonction des valeurs de hachage, les relations de mappage entre les identifiants originaux des noeuds et les identifiants uniques des noeuds et les premières données de uplet des arêtes dans les au moins deux fichiers de fragments.

3. Procédé selon la revendication 1, dans lequel l'obtention (S240) de la troisième paire de données de uplet en fonction des deuxièmes données de uplet des arêtes comprend les étapes consistant à :
écrire (S340) les deuxièmes données de uplet des arêtes dans au moins deux nouveaux fichiers de fragments en fonction des identifiants uniques des arêtes ; et
obtenir (S350) la troisième paire de données de uplet sur la base de deuxièmes données de uplet ayant un identifiant unique identique d'une arête dans les nouveaux fichiers de fragments.

4. Procédé selon la revendication 3, dans lequel l'obtention (S350) de la troisième paire de données de uplet sur la base de deuxièmes données de uplet ayant un identifiant unique identique de l'arête dans les nouveaux fichiers de fragments comprend les étapes consistant à :
trier, dans un nouveau fichier de fragments, les deuxièmes données de uplet en fonction des identifiants uniques des arêtes ; et
obtenir la troisième paire de données de uplet en fonction des deuxièmes données de uplet ayant l'identifiant unique identique de l'arête.

5. Procédé selon la revendication 3, dans lequel la combinaison (S250) des troisièmes données de uplet pour déterminer des données combinées comprend les étapes consistant à :
écrire (S450), en fonction des identifiants uniques des premiers noeuds dans les troisièmes données de uplet, les troisièmes données de uplet dans au moins deux fichiers de fragments à combiner ;
trier (S460) les troisièmes données de uplet dans les fichiers de fragments à combiner ; et
combiner (S470) les troisièmes données de uplet triées pour obtenir les données combinées.

6. Appareil d'importation de données de graphiques par lots dans une base de données de graphiques, comprenant :
un module de détermination (610) de premières données de uplet, configuré pour déterminer (S110, S210) des premières données de uplet d'arêtes dans les données de graphiques ;
une partie de premières données de uplet d'une arête comprend au moins un identifiant original d'un noeud associé à l'arête, une étiquette d'arête, un type de noeud et un identifiant unique de l'arête ; dans lequel un identifiant unique d'une longueur fixe est attribué séquentiellement à chaque noeud et à chaque arête en fonction du nombre naturel, et une relation de mappage entre un identifiant original d'un noeud et un identifiant unique du noeud est établie après que l'identifiant unique est attribué au noeud,
un module d'écriture de données (620), configuré pour écrire (S120, S220), en fonction des identités originales (ids) des noeuds dans les données de graphiques :
- mapper les relations entre les identifiants originaux des noeuds et les identifiants uniques des noeuds ; et
- des premières données de uplet des arêtes
dans au moins deux fichiers de fragments ; dans lequel la relation de mappage et les premières données de uplet ayant l'identifiant original identique d'un noeud sont écrites dans le même fichier de fragments ; dans lequel le fichier de fragments est situé dans un disque magnétique, et une taille de chaque fichier de fragments est inférieure à la capacité de mémoire ;
un module de détermination de données combinées (630), configuré pour déterminer (S130) des données combinées en fonction desdites relations de mappage et des premières données de uplet des arêtes dans les au moins deux fichiers de fragments,
dans lequel le module d'écriture de données (620) est en outre configuré pour écrire (S140) les données combinées dans un fichier de données dans la base de données de graphiques,
dans lequel le module de détermination de données combinées (630) est en outre configuré pour :
déterminer (S230) des deuxièmes données de uplet des arêtes en fonction des relations de mappage et des premières données de uplet des arêtes dans les au moins deux fichiers de fragments, dans lequel les deuxièmes données de uplet d'une arête comprennent au moins un identifiant unique de l'arête, un identifiant unique d'un noeud, une étiquette d'arête et un type de noeud ; dans lequel pour chaque fichier de fragments, le fichier de fragments est lu à partir du disque magnétique vers une mémoire, dans la mémoire, les premières données de uplet et les relations de mappage sont triées en fonction des identifiants originaux des noeuds, et les identifiants originaux des noeuds dans les premières données de uplet des arêtes sont remplacés par les identifiants uniques des noeuds, pour obtenir des deuxièmes données de uplet des arêtes ;
obtenir (S350, S240) une troisième paire de données de uplet en reconstruisant des deuxièmes données de uplet partageant un identifiant unique identique d'une arête dans les nouveaux fichiers de fragments, dans lequel deux parties de deuxièmes données de uplet partageant un identifiant unique identique d'une arête correspondent uniquement à une troisième paire de données de uplet ; dans lequel une partie des troisièmes données de uplet comprend au moins l'identifiant unique du premier noeud, l'étiquette d'arête, le type du premier noeud, l'identifiant unique du deuxième noeud et l'identifiant unique de l'arête ; et
combiner (S250) les troisièmes données de uplet pour déterminer les données combinées ; dans lequel les données combinées sont composées de deux ou plusieurs champs combinés, un premier champ combiné étant composé d'un identifiant unique d'un premier noeud, d'une étiquette d'arête et d'un type du premier noeud, et un deuxième champ combiné étant composé d'un identifiant unique d'un deuxième noeud et d'un identifiant unique d'une arête, le premier noeud et le deuxième noeud étant des noeuds associés à l'arête, dans lequel le premier champ combiné est un champ d'index et le deuxième champ combiné est un champ de valeur, et le deuxième champ combiné comprend au moins une valeur,

7. Dispositif électronique, comprenant :
au moins un processeur ; et
un dispositif de stockage, communiquant avec l'au moins un processeur,
dans lequel le dispositif de stockage stocke une instruction exécutable par l'au moins un processeur, et l'instruction, lorsqu'elle est exécutée par l'au moins un processeur, permet à l'au moins un processeur de mettre en oeuvre le procédé d'importation de données dans une base de données de graphiques selon l'une quelconque des revendications 1 à 5.

8. Support de stockage lisible par ordinateur non transitoire, stockant une instruction informatique, dans lequel l'instruction informatique, lorsqu'elle est exécutée par un processeur, amène le processeur à mettre en oeuvre le procédé d'importation de données dans une base de données de graphiques selon l'une quelconque des revendications 1 à 5.
